# EUROPÄISCHE PATENTSCHRIFT

(11) **EP 3 535 080 B1**
(45) Veröffentlichungstag und Bekanntmachung des Hinweises auf die Patenterteilung: **09.06.2021**
(21) Anmeldenummer: 18710018.5
(22) Anmeldetag: 07.03.2018
(51) Int. Cl.: B23B 51/02

(54) **BOHRWERKZEUG**
DRILLING TOOL
OUTIL DE PERÇAGE

(30) Priorität: 10.03.2017 DE 102017105171
(43) Veröffentlichungstag der Anmeldung: 11.09.2019
(73) Patentinhaber: Hptec GmbH, 88214 Ravensburg (DE)
(72) Erfinder: NETZER, Stefan, 88364 Wolfegg (DE)
(74) Vertreter: Otten, Roth, Dobler & Partner mbB Patentanwälte
(86) Internationale Anmeldenummer: PCT/EP2018/055586
(87) Internationale Veröffentlichungsnummer: WO 2018/162544

(56) Entgegenhaltungen:
- EP-A1- 1 972 398
- DE-A1-102014 108 219
- DE-U1- 29 620 308

## Beschreibung

Die Erfindung betrifft ein Bohrwerkzeug zum Bohren von Werkstücken nach dem Oberbegriff des Anspruchs 1 und wie aus DE 296 20 308 U1 offenbart. Nach dem Stand der Technik werden Bohrwerkzeuge üblicherweise nach einer gewissen Zeit im Betrieb nachgeschliffen; dies gilt auch für vergleichsweise kleine Bohrer, die zum Beispiel bei der Fertigung von Leiterplatten (PCB) eingesetzt werden. Dieser Vorgang ist nötig, da die Spitze des Bohrwerkzeugs beim Gebrauch mehr und mehr infolge der Beanspruchung durch Reibung und durch Stöße abstumpft. Aufgrund dessen wird auch das zentrierte Ansetzen des Bohrers mit einer abgestumpften Spitze bei ständigem Einsatz immer schwieriger, d.h. die Präzision des Werkzeugs geht mehr und mehr verloren. In der Regel können vor allem solche kleinen Bohrer, etwa aus der Fertigung von Leiterplatten, aber nur ein- oder zweimal nach geschliffen werden und weisen dann bei weiterem Abstumpfen der Werkzeugspitze eine geringere Performanz auf.

Aufgabe der Erfindung ist es, ein Bohrwerkzeug vorzuschlagen, dessen Lebensdauer erhöht werden kann.

Die Aufgabe wird durch ein Bohrwerkzeug mit den Merkmalen des Anspruchs 1 gelöst.

Durch die in den abhängigen Ansprüchen genannten Maßnahmen sind vorteilhafte Ausführungen und Weiterbildung der Erfindung möglich.

Das erfindungsgemäße Bohrwerkzeug zum Bohren von Werkstücken umfasst zunächst einen Grundkörper und eine in Vorschubrichtung sich entlang der Drehachse verjüngende, insbesondere chronisch zulaufende Werkzeugspitze. Das Bohrwerkzeug ist entsprechend um diese Drehachse in einer Drehrichtung bei der spanabhebenden Bearbeitung drehbar. Der Grundkörper wiederum umfasst einen Hauptzug in Form wenigstens einer gewendelten Vertiefung. In der Regel sind zwei gewendelte Vertiefungen vorhanden. Die Vertiefung bezieht sich auf das durch das rotierende Bohrwerkzeug eingenommene Rotationsvolumen. Späne, Bohrmehl und sonstiges, aus dem Werkstück bei der Bearbeitung entnommenes Material können beim Bohren innerhalb der gewendeten Vertiefung vom Werkstück weg transportiert werden, d.h. die gewendelten Vertiefungen entsprechen jeweils einer Förderwendel.

Im Stillstand nimmt das Bohrwerkzeug ein gewisses Volumen ein. Im Bereich des Grundkörpers durchsetzt im Stillstand der eigentliche Hauptzug bis auf die (winkelmäßig dazu versetzten) gewendelten Vertiefungen das eingenommene Volumen. In Rotation bildet der sich drehende Hauptzug das entsprechende Rotationsvolumen. In der Mitte des Bohrwerkzeugs um diese Drehachse herum ist also ein Kern gebildet, der permanent, also sowohl im Stillstand als auch bei Rotation das eingenommene Volumen abzüglich des Hauptzugs durchsetzt.

Dementsprechend zeichnet sich das erfindungsgemäße Bohrwerkzeug dadurch aus, dass der Kern in einem ersten Abschnitt, der an der Werkzeugspitze beginnt bzw. an die Werkzeugspitze heranreicht, eine konstante Querschnittsfläche senkrecht zur Drehachse aufweist und in einem sich entgegen der Vorschubrichtung anschließenden zweiten Abschnitt eine zumindest abschnittsweise zunehmende Querschnittsfläche aufweist. Stumpft die Werkzeugspitze des Bohrers im Betrieb mehr und mehr ab, muss diese nach einer gewissen Zeit nachgeschliffen werden.

Durch die Maßnahme, dass der Kern in seiner Querschnittsfläche im vorderen Bereich des Bohrwerkzeugs, also im Bereich der Werkzeugspitze, konstant ist, ändert sich der an der Werkzeugspitze befindliche Kern hinsichtlich seiner Querschnittsfläche also auch dann nicht, wenn das Werkzeug gemäß der Erfindung dort nach geschliffen wird. Für viele Anwendungen, gerade im Bereich der Leiterplattenfertigung, (PCB: printed-circuit board) werden nämlich oftmals kleine Bohrer mit Kernanstieg verwendet.

Bei diesen herkömmlichen, aus dem Stand der Technik bekannten Bohrern verändert sich die Querschnittsfläche des Kerns entgegen der Vorschubrichtung, was geometrisch unter anderem dadurch zustande kommt, dass die Tiefe der Förderwendel entgegen der Vorschubrichtung mehr und mehr abnimmt. Bei einem üblichen Schleifvorgang wird das Werkzeug (in Richtung der Drehachse) in der Regel um einen Betrag von maximal ca. 0,05 mm verkürzt, wobei je nach Einzelfall Abweichungen hiervon möglich sind. Bei kleinen Bohrern (z.B. für PCB-Fertigung) wird in der Regel beim Nachschleifen wenig Material abgenommen.

Bei dem erfindungsgemäßen Bohrwerkzeug jedoch bleibt der Kern hinsichtlich seiner Querschnittsfläche in einem ersten Abschnitt konstant, wobei dieser erste Abschnitt hinsichtlich seiner Erstreckung entlang der Drehachse größer gewählt ist als die Länge, die dann beim Schleifen vom Werkzeug abgenommen wird. Auf diese Weise tritt im Bereich der Werkzeugspitze gegenüber dem ursprünglichen, neuen Bohrwerkzeug effektiv keine geometrische Änderung ein. Die nachgeschliffene Werkzeugspitze kann das Werkzeug an der Bohrstelle wieder zentrieren, während die Querschnittsfläche des Kerns sich ebenfalls gegenüber dem neuen Werkzeug nicht geändert hat. Somit kann an der Werkzeugspitze auch die Größe und Geometrie der Förderwendel und der in den Hauptzug übergehenden Schneiden erhalten bleiben.

Während bei herkömmlichen Bohrwerkzeugen in der Regel nur ein oder zweimal nachgeschliffen werden konnte, können die Nachschlagvorgänge beim erfindungsgemäßen Bohrwerkzeug öfter erfolgen. Bei herkömmlichen Bohrwerkzeugen aus dem Stand der Technik trat bereits beim ersten nach Schleifen eine deutliche Änderung gegen über dem ursprünglichen, neuen Werkzeug ein, da durch das Verkürzen des Werkzeugs sich auch der Kern Durchmesser bzw. die Querschnittsfläche des Kerns änderte. Da üblicherweise die Verkürzung des Werkzeugs beim Nachschleifen relativ gering ausfällt, ist meist auch zu erwarten, dass beim ersten Nachschleifen die Querschnittsfläche des Kerns sich nicht allzu stark ändert, auch wenn es sich um ein herkömmliches Bohrwerkzeug nach dem Stand der Technik handelt. Bei wiederholtem Schleifen wird diese Änderung jedoch immer größer, sodass bei dem Bohrwerkzeug meist spätestens nach dem zweiten Schleifen die Performanz abnimmt, indem z.B. die Bruchrate steigt, die Oberflächenqualität der Bohrwandung abnimmt, die Auslenkung der Werkzeuge zum Zentrum zunimmt, die Grat-Bildung beim Ein- bzw. Austritt zunimmt, oder dergleichen.

Im Unterschied hierzu kann beim erfindungsgemäßen Bohrwerkzeug prinzipiell ein Schleifvorgang so oft vorgenommen werden, bis die Länge des Bohrwerkzeugs derart verkürzt ist, dass der erste Abschnitt, in dem die Querschnittsfläche des Kerns konstant ist, aufgebraucht ist. Insgesamt kann durch das erfindungsgemäße Bohrwerkzeug auch die Präzision erhöht werden, da die Werkzeugspitze bzw. der Bereich der Werkzeugspitze auch beim Nachschleifen sich nicht zwangsläufig ändert, sondern allenfalls das Werkzeug selbst in seiner Länge etwas verkürzt wird.

Insbesondere können im ersten Abschnitt bei einer Ausführungsform der Erfindung die Konturlinien des Kerns, welche in einer Schnittebene, welche die Drehachse enthält, liegen, parallel zur Drehachse verlaufen.

Erst in einem sich anschließenden zweiten Abschnitt, der also von der Werkzeugspitze weiter beanstandet ist als der erste Abschnitt nimmt die Querschnittsfläche des Kerns wenigstens abschnittsweise zu.

Der Hauptzug bzw. die Werkzeugspitze können bei Ausführungsform der Erfindung wenigstens eine, insbesondere zwei Schneiden aufweisen. Die durch den Hauptzug gebildete Schneide kann sich im Bereich der Werkzeugspitze fortsetzen. Die Schneide des Hauptzugs bzw. die Nebenschneide kann grundsätzlich in eine Schneide im Bereich der Werkzeugspitze übergehen. Die Schneide im Bereich der Werkzeugspitze kann sich also in ihrem Verlauf unmittelbar an die Nebenschneide anschließen, es muss jedoch kein glatter Übergang zwischen den beiden Schneiden erfolgen. Die Ausbildung wenigstens zweier Nebenschneide n ermöglicht eine Verteilung der Bearbeitung auf die jeweiligen Nebenschneiden und somit ein gleichmäßiges Spanabheben innerhalb des Bohrloch.

Im zweiten Abschnitt kann je nach Ausführungsvariante der Erfindung die Querschnittsfläche des Kerns entlang der Drehachse entgegen der Vorschubrichtung monoton oder sogar streng monoton zunehmen, d.h. die Querschnittsfläche wird mit zunehmendem Abstand von der Werkzeugspitze zumindest nicht geringer. Es ist aber denkbar, dass es innerhalb des zweiten Abschnitts Bereiche gibt, in denen die Querschnittsfläche abschnittsweise entgegen der Vorschubrichtung konstant bleibt. Stück für Stück wird somit die Tiefe der Förderwendel jedoch immer kleiner, sodass zum einen die Stabilität des Bohrwerkzeugs zu der Stelle hin, an der das Bohrwerkzeug eingespannt ist, immer mehr zunimmt und das vom Werkstück entnommene Material mehr und mehr aus dem Bohrwerkzeug hinausgedrängt wird.

Bei einem Ausführungsbeispiel der Erfindung kann die Zunahme der Querschnittsfläche in einer Richtung entgegen der Vorschubrichtung jedoch immer schwächer zunehmen. Dies ist vorteilhaft, da sich die Querschnittsfläche des Kerns in der Regel der Dicke des Bohrwerkzeugs oder gegebenenfalls der Dicke des Schaftes, in dessen Bereich das Werkzeug eingespannt ist, annähert. Die Tiefe der Förderwendel bzw. der gewendeten Vertiefung geht somit mit zunehmendem Abstand von der Werkzeugspitze gegen null. Anders ausgedrückt nimmt die Neigung der Konturlinie des Kerns gegenüber der Drehachse mit zunehmender Entfernung von der Werkzeugspitze, also entgegen der Vorschubrichtung, immer mehr ab.

Dadurch, dass die Konturlinien des Kerns in einer Richtung entgegen der Vorschubrichtung entlang der Drehachse immer weiter auseinanderlaufen, wird sich in der Regel auch die Querschnittsfläche des Kerns in einem Schnitt senkrecht zur Drehachse immer weiter vergrößern.

Erfindungsgemäß besitzt der Hauptzug einen Spiralwinkel der im Verlauf der Nebenschneide entgegen der Vorschubrichtung immer mehr abnimmt, und zwar in einem Winkelbereich von anfänglich 43° bis 38°. Der Spiralwinkel bildet den Winkel zwischen der Nebenschneide und einer senkrechten zur Drehachse. Je weiter sich eine Stelle am Bohrwerkezug von der Werkzeugspitze weg befindet, desto weniger wird dort ein Beitrag zur eigentlichen spanabhebenden Bearbeitung beitragen, selbst bei Tiefbohrungen. In der Regel wird hier im Bereich der Förderwendel ein Materialtransport der Späne bzw. des Bohrmehls durchgeführt, aber kaum neues Material aus dem Werkstück entfernt. Je näher man sich an der Werkzeugspitze befindet, desto schneller soll ein Materialtransport erfolgen, weil die abgetragenen Späne und das abgetragene Bohrmehl die Bearbeitung grundsätzlich eher stören, wenn dort Material aus dem Werkstück abgenommen wird. Insgesamt ist es daher vorteilhaft, dass der entsprechende Spiralwinkel entgegen der Vorschubrichtung abnimmt.

Ein Ausführungsbeispiel Erfindung ist in den Zeichnungen dargestellt und wird nachstehend unter Angabe weiterer Einzelheiten und Vorteile näher erläutert. Im Einzelnen zeigen:
- Figur 1:: eine Darstellung eines Bohrers gemäß der Erfindung in Seitenansicht,
- Figur 2:: eine Draufsicht auf die Werkzeugspitze des Bohrers aus Figur 1 entlang der Drehachse, sowie
- Figur 3:: eine schematische Darstellung der Seitenansicht eines Bohrers gemäß der Erfindung.

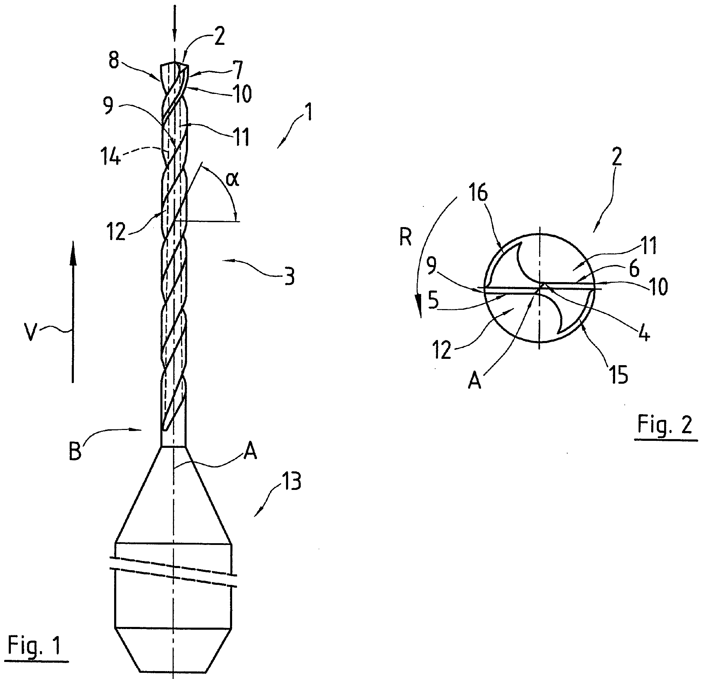

Figur 1 zeigt einen Bohrer 1 mit einer Werkzeugspitze 2 und einem Grundkörper 3. Der Bohrer 1 wird zum Bohren eines Werkstücks um eine Drehachse A gedreht. Der Grundkörper 3 nimmt bei einer Rotation um die Drehachse A ein zylindrisches Volumen ein.

Die Werkzeugspitze 2 ist in Draufsicht in Figur 2 dargestellt. Durch die Drehachse A verläuft eine Querschneide 4 die wiederum in zwei Hauptschneiden 5, 6 der Werkzeugspitze 2 übergeht. Diese Hauptschneiden 5, 6 verlaufen nach außen und gehen sodann in den Hauptzug 7, 8 bzw. in die Nebenschneiden 9, 10 über. Im Zwischenbereich des Hauptzugs bilden sich somit zwei gewendelte Vertiefungen 11, 12, die als Förderwendeln dienen und für einen Transport des abgetragenen Bohrmehls bzw. der abgetragenen Späne entgegen der Vorschubrichtung V sorgen. Die Förderwendeln 11, 12 enden jeweils im Bereich des Punktes B. Bis zu diesem Punkt bzw. bis zu dieser Höhe nimmt auch jeweils ihre Tiefe ab. Zudem ist beispielhaft ein Spiralwinkel α eingezeichnet, wobei dieser im Verlauf entgegen der Vorschubrichtung V von der Werkzeugspitze 2 in Richtung des Schaftes 13 abnimmt.

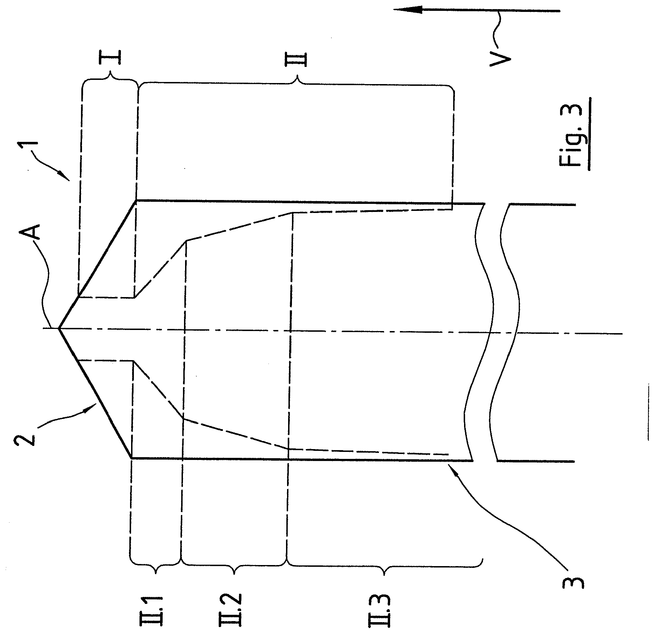

In Figur 1 ist ebenfalls der Kern 14 gestrichelt gezeichnet, wobei in der Seitenansicht dessen Konturlinien dargestellt sind. Beim vorliegenden Ausführungsbeispiel handelt es sich um einen im Wesentlichen um die Drehachse A rotationssymmetrischen Kern 14. Dementsprechend laufen in Richtung entgegen der Vorschubrichtung V nicht nur dessen Konturlinien in einer Schnittdarstellung durch die Drehachse A auseinander, sondern auch die Querschnittsfläche (gemessen senkrecht zur Drehachse) nimmt entsprechend zu. Mit im Verlauf entgegen der Vorschubrichtung V größer werdender Querschnittsfläche des Kerns 14 nimmt auch die Tiefe der Förderwendel 11, 12 gegenüber der Drehachse A ab. Im oberen Bereich in der Nähe der Werkzeugspitze, im ersten Abschnitt I, ist die Querschnittsfläche des Kerns 14 jedoch konstant (Figur 3). In dem darauffolgenden zweiten Abschnitt II nimmt die Querschnittsfläche des Kerns 14 in einzelnen Abschnitten II.1, II.2, II.3 stetig zu. Die Querschnittsfläche des Kerns 14 nähert sich somit der Querschnittsfläche des zylindrischen Rotationsvolumens des Grundkörpers drei an. Muss also das Bohrwerkzeug 1 nachgeschliffen werden, bleibt der Kern 14 hinsichtlich seiner Form und Querschnittsfläche erhalten und unterscheidet sich praktisch nicht von dem des ursprünglichen Werkzeugs.

Wie im Übrigen in den Figuren 1 und 2 dargestellt ist, befindet sich in Drehrichtung R jeweils hinter den Nebenschneiden 9, 10 eine Freifläche 15,16, die nach außen hin gekrümmt und im Wesentlichen parallel zur Mantelfläche des zylindrischen Rotationsvolumens verläuft.

### Bezugszeichenliste:

- 1: Bohrwerkzeug
- 2: Werkzeugspitze
- 3: Grundkörper
- 4: Querschneide
- 5: Hauptschneide
- 6: Hauptschneide
- 7: Hauptzug
- 8: Hauptzug
- 9: Nebenschneide
- 10: Nebenschneide
- 11: Förderwendel
- 12: Förderwendel
- 13: Schaft
- 14: Kern
- 15: Freifläche
- 16: Freifläche
- I: erster Abschnitt
- II: zweiter Abschnitt
- II.1: Teilabschnitt
- II.2: Teilabschnitt
- 22.3: Teilabschnitt
- A: Drehachse
- B: Ende der Förderwendeln
- R: Drehrichtung
- V: Vorschubrichtung
- α: Spiralwinkel

## Patentansprüche

1. Bohrwerkzeug (1) zum Bohren von Werkstücken, das um eine Drehachse (A) in einer Drehrichtung bei der spanabhebenden Bearbeitung drehbar ist, umfassend:
- eine in Vorschubrichtung (V) entlang der Drehachse (A) sich verjüngende, insbesondere konisch zulaufende Werkzeugspitze (2) und
- einen Grundkörper (3),
- wobei der Grundkörper (3) wenigstens einen Hauptzug (7, 8) als wenigstens eine gewendelte Vertiefung, insbesondere zwei gewendelte Vertiefungen (11, 12) gegenüber dem durch das rotierende Bohrwerkzeug (1) eingenommenen Rotationsvolumen zur Ausbildung einer Förderwendel, insbesondere zweier Förderwendeln aufweist,
- wobei das im Stillstand vom Bohrwerkzeug (1) eingenommene Volumen abzüglich des wenigstens einen Hauptzugs (7, 8), das permanent sowohl im Stillstand als auch bei Rotation durchsetzt ist, den Kern (14) ausbildet, wobei der Kern (14) in einem ersten Abschnitt (I), der an der Werkzeugspitze (2) beginnt und/oder an die Werkzeugspitze heranreicht, eine konstante Querschnittsfläche senkrecht zur Drehachse (A) aufweist, und in einem sich anschließenden zweiten Abschnitt (II) entgegen der Vorschubrichtung (V) eine zumindest abschnittsweise zunehmende Querschnittsfläche aufweist, wobei die wenigstens eine gewendelte Vertiefung (11, 12) senkrecht zur Drehachse (A) entgegen der Vorschubrichtung (V) immer mehr, nämlich monoton oder streng monoton, abnimmt, **dadurch gekennzeichnet, dass** der wenigstens eine Hauptzug (7, 8) jeweils eine Nebenschneide (9, 10) ausbildet, die einen Spiralwinkel (α) als Winkel gegenüber einer Senkrechten zur Drehachse (A) einschließt, der im Verlauf der Nebenschneide (9, 10) entgegen der Vorschubrichtung (V) von anfänglich 43° bis 38° abnimmt.

2. Bohrwerkzeug (1) nach Anspruch 1, **dadurch gekennzeichnet, dass** der Hauptzug (7, 8) und/oder die Werkzeugspitze (2) wenigstens eine Schneide (4; 5, 6; 9, 10) aufweist / aufweisen.

3. Bohrwerkzeug (1) nach einem der vorgenannten Ansprüche, **dadurch gekennzeichnet, dass** die Querschnittsfläche des Kerns (14) entgegen der Vorschubrichtung (V)entlang der Drehachse (A) im zweiten Abschnitt (II) monoton oder streng monoton zunimmt.

4. Bohrwerkzeug (1) nach einem der vorgenannten Ansprüche, **dadurch gekennzeichnet, dass** der zweite Abschnitt (II) wenigstens zwei aufeinanderfolgende Teilabschnitte (II.1, II.2, II.3) aufweist, die entgegen der Vorschubrichtung (V) entlang der Drehachse (A) eine immer stärker, insbesondere monoton oder streng monoton, abnehmende Neigung zur Drehachse (A) aufweisen.

5. Bohrwerkzeug (1) nach einem der vorgenannten Ansprüche, **dadurch gekennzeichnet, dass** die Querschnittsfläche des Kerns (14) entgegen der Vorschubrichtung (V) im zweiten Abschnitt (II) immer weniger, insbesondere monoton oder streng monoton, zunimmt.

6. Bohrwerkzeug (1) nach einem der vorgenannten Ansprüche, **dadurch gekennzeichnet, dass** der zweite Abschnitt (II) sich entgegen der Vorschubrichtung immer mehr, insbesondere monoton oder streng monoton, der Querschnittsfläche des Rotationsvolumens annähert, die vom rotierenden Bohrwerkzeug eingenommen wird.

## Claims

1. A drilling tool (1) for drilling workpieces, which drilling tool can be rotated about an axis of rotation (A) in one direction of rotation during the machining, comprising:
- a tool tip (2), which tapers in the feed direction (V) along the axis of rotation (A), in particular tapers conically, and
- a main body (3),
- wherein the main body (3) has at least one primary facet (7, 8) as at least one spiralled depression, in particular two spiralled depressions (11, 12) with respect to the rotational volume occupied by the rotating drilling tool (1) to form a conveyor spiral, in particular two conveyor spirals,
- wherein the volume occupied by the drilling tool (1) at a standstill, minus the at least one primary facet (7, 8), which is permeated permanently both during standstill and during rotation, forms the core (14), wherein the core (14) in a first portion (I), which begins at the tool tip (2) and/or extends to the tool tip, has a constant cross-sectional area perpendicular to the axis of rotation (A), and in an adjoining second portion (II) opposite the feed direction (V) has a cross-sectional area that increases at least in some sections, wherein the at least one spiralled depression (11, 12) decreases more and more, namely monotonically or strictly monotonically, perpendicularly to the axis of rotation (A) counter to the feed direction (V), **characterised in that** the at least one primary facet (7, 8) in each instance forms a secondary cutting edge (9, 10), which encloses a spiral angle (α) as an angle with respect to a perpendicular to the axis of rotation (A), which angle decreases in the course of the secondary cutting edge (9, 10) against the feed direction (V) from initially 43° to 38°.

2. The drilling tool (1) according to claim 1, **characterised in that** the primary facet (7, 8) and/or the tool tip (2) has/have at least one cutting edge (4; 5, 6; 9, 10).

3. The drilling tool (1) according to one of the preceding claims, **characterised in that** the cross-sectional area of the core (14) increases monotonically or strictly monotonically counter to the feed direction (V) along the axis of rotation (A) in the second portion (II).

4. The drilling tool (1) according to one of the preceding claims, **characterised in that** the second portion (II) has at least two successive sub-portions (11.1, II.2, II.3) which, contrary to the feed direction (V) along the axis of rotation (A), have an ever increasing, in particular monotonically or strictly monotonically, decreasing inclination to the axis of rotation (A).

5. The drilling tool (1) according to one of the preceding claims, **characterised in that** the cross-sectional area of the core (14) increases less and less, in particular monotonically or strictly monotonically, counter to the feed direction (V) in the second portion (II).

6. The drilling tool (1) according to one of the preceding claims, **characterised in that** the second portion (II) approaches the cross-sectional area of the rotating volume, which is occupied by the rotating drilling tool, more and more, in particular monotonically or strictly monotonically, counter to the feed direction.

## Revendications

1. Outil de perçage (1) permettant de percer des pièces, lequel peut tourner autour d'un axe de rotation (A) dans une direction de rotation lors de l'usinage par enlèvement des copeaux, comprenant :
- une pointe d'outil (2), en particulier de forme conique, s'effilant dans une direction d'avance (V) le long de l'axe de rotation (A) et
- un corps de base (3),
- le corps de base (3) comportant au moins une traction principale (7, 8) sous forme d'au moins une cavité enroulée en hélice, en particulier de deux cavités (11, 12) enroulées en hélice opposées à un volume de rotation occupé par l'outil de perçage (1) rotatif pour former une hélice de transport, en particulier deux hélices de transport,
- le volume occupé par l'outil de perçage (1) à l'état d'arrêt moins l'au moins une traction principale (7, 8), laquelle est traversée en permanence à l'état d'arrêt et pendant la rotation, formant le noyau (14), dans lequel le noyau (14) comporte, dans une première section (I), laquelle commence à la pointe de l'outil (2) et/ou laquelle s'étend jusqu'à la pointe de l'outil, une surface de section transversale constante perpendiculaire à l'axe de rotation (A) et comporte, dans une seconde section (II), contiguë opposée à la direction d'avance (V), une surface de section transversale augmentant au moins partiellement, l'au moins une cavité (11, 12) enroulée en hélice diminue de plus en plus perpendiculairement à l'axe de rotation (A), dans le sens opposé à la direction d'avance (V), à savoir de manière monotone ou strictement monotone, **caractérisé en ce que** l'au moins une traction principale (7, 8) forme respectivement une arête tranchante secondaire (9, 10), laquelle comprend un angle de spirale (α) en tant qu'angle par rapport à une perpendiculaire à l'axe de rotation (A), lequel diminue, le long de l'arête tranchante secondaire (9, 10), dans le sens opposé à la direction d'avance (V) de 43° initialement à 38°.

2. Outil de perçage (1) selon la revendication 1, **caractérisé en ce que** la traction principale (7, 8) et/ou la pointe d'outil (2) comportent au moins une arête tranchante (4 ; 5, 6 ; 9, 10).

3. Outil de perçage (1) selon l'une quelconque des revendications précédentes, **caractérisé en ce que** la section transversale du noyau (14) augmente de manière monotone ou strictement monotone dans le sens opposé à la direction d'avance (V) le long de l'axe de rotation (A) dans la seconde section (II).

4. Outil de perçage (1) selon l'une quelconque des revendications précédentes, **caractérisé en ce que** la seconde section (II) comporte au moins deux sections partielles (11.1, II.2, II.3) successives, lesquelles présentent, dans le sens opposé à la direction d'avance (V) le long de l'axe de rotation (A), une inclinaison diminuant de plus en plus grande, en particulier de manière monotone ou strictement monotone par rapport à l'axe de rotation (A).

5. Outil de perçage (1) selon l'une quelconque des revendications précédentes, **caractérisé en ce que** la section transversale du noyau (14) augmente de moins en moins, en particulier de manière monotone ou strictement monotone, dans le sens opposé à la direction d'avance (V) dans la seconde section (II).

6. Outil de perçage (1) selon l'une quelconque des revendications précédentes, **caractérisé en ce que** la seconde section (II) s'approche de plus et plus, dans le sens opposé à la direction d'avance, en particulier de manière monotone ou strictement monotone, de la surface de section transversale du volume de rotation, lequel est occupé par l'outil de perçage rotatif.
